# EUROPEAN PATENT APPLICATION

(11) **EP 1 650 985 A1**
(43) Date of publication of application: **26.04.2006**
(21) Application number: 04300707.9
(22) Date of filing: 21.10.2004
(51) Int. Cl.: H04Q 3/00, H04Q 3/545

(54) **Call handling package associated with a telephone number**

(71) Applicant: Hewlett-Packard Development Company, L.P., Houston, TX 77070 (US)
(72) Inventor: Hyerle, Robert, HP Centre de Competences France, 38190 Bernin (FR)
(74) Representative: Lloyd, Richard Graham

(57) **Abstract**

According to one aim of the present invention there is provided a method, in a telecommunications network, of creating user-definable call handling functionality accessible by way of telephone call to a voice application (402), comprising: generating a call handling package comprising one or more conditions, and one or more call handling actions, allocating an identifier to the call handling package in such a way that when a call is placed to the voice application (402) the allocated identifier is requested, and in response to receiving the allocated identifier the voice application handles the call in accordance with the call handling package associated with the identifier.

## Description

The present invention relates generally to the field of telecommunications, and more particularly to telephone based communications.

Traditional telephony networks, such as public switched telephone networks (PSTN) and mobile radiotelephone networks use telephone subscriber numbers to identify subscribers of a telephone network. In the case of fixed line telephone networks, a subscriber number typically identifies one or more subscriber terminals connected to a specific subscriber telephone line. In the case of a mobile telephony, a subscriber number typically identifies a single subscriber terminal.

When a call is placed to a specific subscriber number a call establishment request is sent, via the telephone network, to a called terminal identified by the dialed subscriber number. If the called terminal accepts and answers the call, the call is connected and the two parties may enter into communication.

In recent years the emergence of so-called intelligent networks has lead to a degree of intelligence being added to existing telephone networks. Intelligent networks now provide telephone subscribers with a wide range of advanced telephony functionality, including network-based voice mail, call diversion, call waiting and the like.

Another common feature of modern telephone networks is call blocking, which enables the selective blocking of both in-bound and out-bound calls. Out-bound call blocking typically prevents one or more groups of telephone numbers from being called from a particular subscriber terminal or subscriber line. Such services are typically used for blocking calls to international and/or premium rate numbers, whilst allowing calls to emergency numbers. In-bound call blocking enables calls made to a subscriber line or terminal from a specified calling number to be blocked. For example, all calls from 'anonymous' numbers which do not send or deliberately withhold their caller-line identification may be blocked, as may individually specified numbers. Both in-bound and out-bound call blocking may be implemented either by the telephony network or by a suitable subscriber terminal.

Another common feature is call diversion. Call diversion, or call forwarding, enables all calls placed to a telephone subscriber number to be automatically routed by the intelligent network to a different subscriber number specified by the user. Typically the subscriber number to which calls are to be diverted is programmed in the intelligent network by way of the user dialing a series of programming codes from a subscriber terminal associated with the subscriber number from which calls are to be diverted.

Other more advanced call diversion systems use a web-based interface to enable call diversion options to be programmed, such as is common in so-called personal telephone number systems. A personal telephone number is a non-geographic or virtual telephone number allocated by a service provider and which is typically subject to a permanent call diversion to a subscriber number. A call made to a personal telephone number is automatically routed to the telephone subscriber number specified by the call diversion. In addition to simple call diversion, many such systems also provide so-called hunting groups which enable the owner of a personal telephone number to specify multiple destinations for the call diversion. In the event of a call diverted to a first diversion number not being answered within a predetermined time, the call is automatically diverted to a further telephone number. A personal telephone number service which enables a user to set-up hunting groups is available, for example, from YAC Ltd (http://www.yac.com).

However, although modern telephone networks provide a degree of intelligence and some advanced functionality, further improvements are still sought.

Accordingly, one aim of the present invention is to improve the functionality provided by existing telephony networks.

According to one aim of the present invention, there is provided a method, in a telecommunications network, of creating user-definable call handling functionality accessible by way of telephone call to a voice application. The method comprises generating a call handling package comprising one or more conditions, and one or more call handling actions, and allocating an identifier to the call handling package in such a way that when a call is placed to the voice application the allocated identifier is requested, and in response to receiving the allocated identifier the voice application handles the call in accordance with the call handling package associated with the identifier.

Advantageously, by enabling a user to define such a call handling package and having it associated with a telephone number enables subsequent calls to that number to be handled in accordance with the call handling package. This enables a wide range of user-definable functionality to be created providing new and advanced functionality to callers and further enhancing the use which can be made of existing and future telephone networks and systems.

Suitably the step of generating a call handling package further comprises defining in one of the call handling actions a destination telephone number.

The step of generating may further comprise defining a limitation parameter.

The limitation parameter may define a limit as to the maximum number of times a call to the telephone number may result in the call being connected to the destination telephone number.

The limitation parameter may define a limit as the maximum length of a call.

A condition may define a time call window during which a call to the telephone number may result in the call being connected to the destination telephone number.

A condition may define an expiry time, before which a call to the telephone number may result in the call being connected to the destination telephone number.

A condition may define one or more telephone numbers from which a call to the telephone number may result in the call being connected to the destination telephone number.
A call handling action may define a telephone subscriber account number to be billed for any call charges relating from a subsequent call being connected to the destination telephone number,

Suitably, details of the created call handling package may be sent to the creator thereof. Details may also be sent, as appropriate the one or more of the defined telephone subscriber numbers.

The telecommunication network may further include a media platform hosting the voice application, in which case the method further comprises supplying details of the call handling package and allocated identifier to the media platform or voice application.

According to a second embodiment, there is provided a method of accessing user-defined call handling functionality accessible through a telephone call placed to a voice application through a telecommunications network. The method comprises the voice application requesting an identifier, retrieving a call handling package associated with the identifier, the call handling package comprising one or more call handling actions and one or more conditions, and carrying out at least one of the call handling actions in accordance with the one or more conditions.

Where the call handling package includes a limitation parameter the step of carrying out of at least one of the call handling actions is conditional on the value of the limitation parameter.

Where the limitation parameter defines a limit as to the maximum number of times the call handling functionality may be accessed, the step of carrying out at least one of the call handling actions only occurs where the value of the limitation parameter is below a predefined value.

Where the one or more conditions defines a call time window, the step of carrying out at least one of the call handling actions only occurs where the call is placed in the time window.
Where the one or more conditions define an expiry time, the step of carrying out at least one of the call handling actions only occurs where the call is placed prior expiration of the expiry time.

Where the one or more conditions define one or more allowed calling telephone numbers, the step of carrying out at least one of the call handling actions only occurs where the call is placed from one of the defined allowed calling telephone numbers.

Suitably, upon completion of the call a billing record is generated in accordance with the one or more call handling actions.

According to a third aspect, there is provided a voice application for a telecommunications system adapted for operating in accordance with any of the steps described above.

Embodiments of the present invention will now be described, by way of example only, with reference to the accompanying drawings, in which:
Figure 1 is a block diagram showing a telecommunications system according to a first embodiment;
Figures 2 and 3 are flow diagrams outlining example procedural steps taken during the operation of the telecommunications system 100 in accordance with the present embodi ment; and
Figure 4 is a block diagram showing a telecommunication system according to a second embodiment.

The embodiments of the present invention described below aim to provide new functionality to existing telecommunication networks by enabling a call handling 'package' to be defined and associated with a telephone number. When a call to the telephone number is made, the call is handled in accordance with the call handling package. The call handling package may comprise, for example, one or more call handling actions, and one or more conditions. A call handling package may also include additional elements, such as parameters having an associated value. A call handling action preferably defines an action to be taken which affects the way in which the call is handled, and a condition may define under what circumstances one or more of the call handling actions are performed or otherwise carried out.

An example call handling action may be 'divert the call to subscriber number #1234', 'charge the callee for the call', 'create a call between subscriber number #1234 and #5678', and so on. A condition may be any suitable condition, such as a call or caller-based condition, for example 'IF the calling number is #3456, THEN perform a given call handling action', 'IF the time of the call is between 9am and 12pm THEN perform a given call handling action', 'IF this is the first time a call is made THEN perform a given call handling action", and so on.

The call handling package associated with a telephone number thus defines the functionality or capability provided to the caller of such a number, and such a telephone number is hereinafter referred to as a capability number. A capability number may therefore have a wide range of differing uses, depending on the nature of call handling package associated therewith. To give a better understanding of the types of use that may be made of a capability number, various non-limiting examples are given below.

For example, a capability number may be defined and created such that when called, the call is connected to an IT support hotline, provided that the call is made between the hours of 11 am and 12pm, Monday to Friday, and in which calls are free to the caller. The one or more conditions define the allowed calling window, and the call handling actions define that the call should be connected to the subscriber number of the hotline, and that any call charges incurred should be billed to an account associated with the destination telephone number.

Such a capability number may be of particular use, for example, for computer equipment manufacturers who may issue a customer with a capability number which enables the customer to make limited use of a free support hotline. Such a capability number may be issued to multiple customers thereby enabling different customers to dial the same capability number to obtain the support provided during a specified calling window.

Such a capability number has a number of advantages. For the support hotline, if the capability number is a virtual telephone, the real number of the hotline is hidden from the user. Also, there is perhaps no need for the support hotline to verify a customer number or other customer authorization information whenever a call is placed to the hotline, since only entitled calls (i.e. those satisfying the conditions defined in the call handling package) are connected to the hotline.

Customers requiring a higher level of support may be able purchase or otherwise acquire a capability number having a larger call window, and a longer validity, for example.

A capability number may be defined and created which is personal to one or more predetermined callers. For example, a call handling package may define that a call to a capability number is connected to a predetermined destination telephone number, only if the call is made from a subscriber line or terminal having a predetermined caller-line identity. If a call to the capability is made from any other number, the call will not be connected to the destination telephone number.

A capability number may also be defined and created to which only a limited number of calls may be placed. Such a limit may be an absolute limit, for example a capability number which can only be called once, or the limit could be a daily limit, for example a capability number which can only be called once a day. This brings into existence a new range of exhaustible telephone numbers which may be of use in a wide range of situations.

For example, a single-use capability number may be given to a customer of a new product to enable that product to be registered. Once a call is made to the single-use number, further calls to the same number do not result in a call connection since the capability number is exhausted.

A single use number may, for example, enable a user to place a single call to, say, a marketing competition. An exhaustible capability number may also be used as a form of 'ticket' which may be 'exchanged' for a service. For example, an enterprise may issue a capability number to a user which may be 'exchanged', for example, for one free call to a legal advice line to be placed on a certain day during a certain time window.

A single use exhaustible capability number may also be used, for example, as a form of lottery ticket or scratch card. For example, a caller may buy a single use lottery capability number, which the caller then calls. The call handling package associated with the capability number defines whether the caller is a 'winner' or a 'loser', and if the caller is deemed to have won, the call handling action may, for example, cause the callers pre-pay mobile account to be credited with a predetermined amount.

Such a system could also be used as way of providing so-called top-up vouchers for users of pre-pay telephone systems. Once the capability number has been called, the number is exhausted and is further calls to the same number do will not result in a call connection, ensuring that only a single account credit is given.

An exhaustible capability number may also be used to provide customers of a product with a limited number of calls to a support hotline. For example, new customers may be entitled to make 5 free calls to a support hotline, or 1 free call per day for 5 days.

A capability number may also be used to provide a customer with one hour of free support, whether it be in a single or multiple calls. In this case, a limitation parameter detailing the maximum allowed time is updated during or after each call, and the capability provided by the capability number is only available whilst there is still some allowed time available. Such a capability provides a new range of callee-based credit accounts, unlike current pre-pay solutions which are caller-based.

A capability number may also have a defined expiry limit, after which time the number is exhausted and is no longer usable.

It can be seen from the above examples that range of uses of such capability numbers is almost limitless, and the above examples are in no way limiting.

The way in which a capability number may be defined and created, and in which calls to a capability number controlled will now be described.

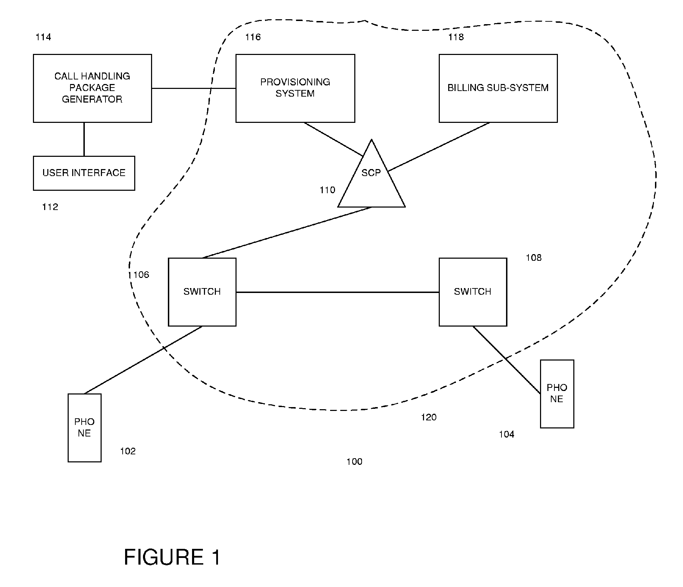

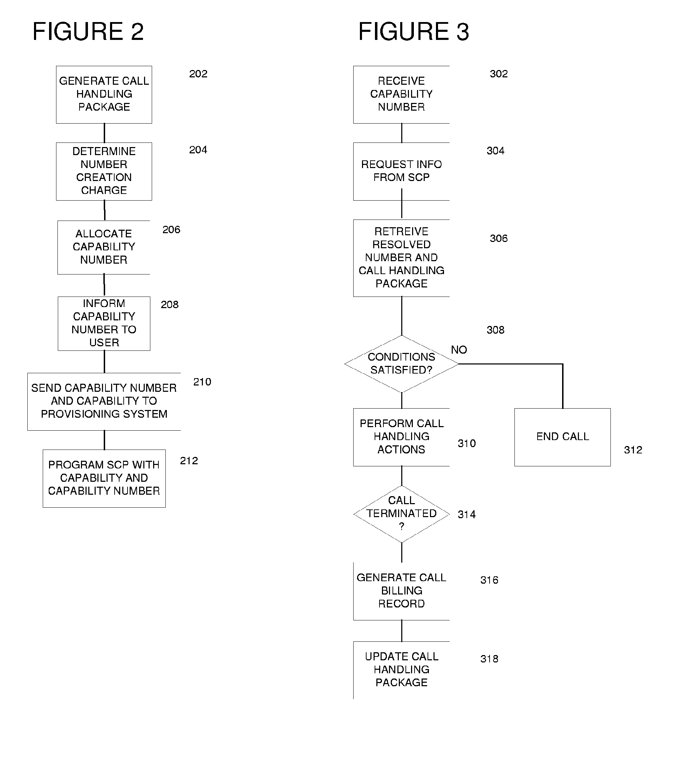

Referring now to Figure 1 there is shown a telecommunications system 100 according to an embodiment of the present invention. The description of the present embodiment is made with additional reference to Figures 2 and 3, which are flow diagrams outlining example procedural steps taken during the operation of the telecommunications system 100 in accordance with the present embodiment.

The telecommunications system 100 comprises a telecommunications network 120, such as an SS7 network, including a number of conventional networks elements such as a number of switches 106 and 108, a service control point (SCP) 110, and a billing sub-system 118. It will be appreciated that, for the sake of clarity, not all elements of a conventional telecommunications network are shown. The telecommunications network 120 enables a calling subscriber terminal 102 to place a call to a called subscriber terminal 104 in the conventional manner. In addition to the conventional telecommunication network and conventional network elements there is provided a call handling package generator sub-system 114, a user interface 112 and a provisioning system 116, the purpose of which will be described below.

A user wishing to create a capability number accesses the user interface 112 which interfaces to the call handling package generator 114. The user interface 112 may be, for example, a web-based interface accessible via a suitable Internet browser, or a voice application accessible via a telephone handset. In the present embodiment the user interface is shown as being outside of the telecommunications network 120, but it may equally be provided within the telecommunications network 120, for example if provided for by the network provider. The exact nature of the user interface does not fall within the scope of this invention, and can be of any suitable form to enable a user to interact in an appropriate manner with the call handling package generator 114.

Through the user interface 112 the user defines or selects any call handling actions, conditions, limitation parameters or other elements making up a call handling package. This may be done in a wide range of ways, such as by using a hierarchical menu structure which, for example, leads the user step-by-step through the various steps necessary for creating a call handling package. Once the elements of the call handling package have been defined, the call handling package generator 114 generates a suitable call handling package. For example, a call handling package may be generated in the form of a computer program, an executable or interpretable script, or the like, as appropriate depending on the particularities of a given network. In one embodiment, a call handling package is generated in the form of service logic expressed in the System Description Language (SDL) is suitable for execution by a Hewlett-Packard OpenCall Service Execution Platform.

The call handling package generator 114 may determine and apply a capability number creation charge (step 204), for example, where the creator of the capability number is charged a one-off charge for the creation of the capability number. This charge may be paid for by the creator of the capability number through a suitable payment system such as using a credit card, or by debiting the creator's telephone account. The charge amount may vary depending on the complexity of the capability created. For example, a capability number which only allows a single predetermined caller to access the capability may be charged for at a lower rate than a capability number which may be accessed by multiple predetermined callers or indeed any caller.

Once the call handling package (step 202) and any number creation charges (step 204) have been determined the call handling package generator 114 allocates (step 206) a virtual telephone number to act as the capability number, and with which the created call handling package is to be associated.

The service provider offering the capability number service preferably has a range of available telephone numbers which may be allocated by the network provider 120 or other telephone number issuing authority. Due to potential restrictions on the number of telephone numbers available to the service provider it may be preferable to re-use existing capability numbers which are no longer used, are no longer useable or are otherwise expired.

The system then informs (step 208) the creator of the capability number of the allocated capability number in any appropriate manner. For example, if the user interface 112 is a web-interface the allocated capability number may be displayed to the creator on the screen of an Internet browser used by the creator for accessing the user interface. Alternatively, if the user interface is an interactive voice application (IVR) the allocated capability number may be returned to the creator by way of voice synthesis or by way of a short message system (SMS) message, for example if the creator is using a mobile telephone to access the user interface.

The capability number and a description or summary of the functionality provided for by the call handling package associated with that number may also be provided to the creator. Additionally, in the case where the capability number has a call handling package which limits calls from being made from one or more specific callers, a message in a suitable format may be sent to the telephone line or terminals concerned.

The capability generator 114 forwards the allocated capability number and associated call handling package to the provisioning system 116 (step 210). The provisioning system programmes, or otherwise makes available to, the SCP 110 appropriate details of the allocated capability number and the associated call handling package. The provisioning system may, for example, suitably store or cause the storing of the details in an appropriate storage element or database accessible by the SCP. Such a storage element could be local to the SCP or remotely located, for example, and accessible by way of a network.

In telecommunication networks such as the network 120 the SCP may be interrogated whenever a switch is requested to route a call which the switch does not know how to route, such as when the dialed telephone number is a non-geographic or virtual telephone number. Since the SCP is a key element of the network 120 it is highly desirable that only trusted information is programmed into or made available to the SCP 110 (step 212). Thus, the provisioning system may be provided by the provider of the network 120 with a secure and trusted access from the call handling package generator 114.

Once the details of the capability number and associated call handling package are known or are made available to the SCP 110, the capability number is ready to be accessed by a caller.

When a user, such as the user of the subscriber terminal 102 dials a capability number, the switch 106 receives (step 302) the call establishment request and attempts to route the call. The switch recognizes the capability number as being a non-geographic number, or recognizes the number as having a call handling package associated therewith, and sends a request (step 304) to the SCP to help handle the call. Normally, the SCP 110 would return the resolved number to the switch upon request. However, the SCP 110 recognizes the dialed capability number as having a call handling package associated therewith and retrieves (step 306) the associated call handling package, for example from a suitable database (not shown). The SCP 110 determines (step 308), whether the one or more conditions defined in the call handling package are satisfied. If they are, the one or more call handling actions are performed or otherwise effected (step 310), and the call is handled in accordance with the call handling package. Otherwise, the call ends (step 312).

For example, if the call handling package defines that a call to a capability number be diverted to subscriber number #1234 if the call is placed between 10am and 12pm, first the condition that the call is placed between the appropriate times is checked (step 308), and if this is satisfied, the call handling action of 'divert the call to telephone number #1234 (step 310), is performed by the SCP or is otherwise effected. Depending on particular network arrangements such a call handling action may result in the SCP, for example, returning a 'connect to' number to the switch 106, thereby enabling the switch 106 to continue with the call establishment request in the normal manner. Otherwise the SCP 110 may take some alternative action, such as delivering a suitable voice message to the caller indicating that the call was unable to be established or by failing to deliver a resolved number to the switch 106, thus ending the call (step 312).

If a call to the capability number results in a successful call being connected, when the call is terminated (step 314), the switch generates a billing record (316) and sends the billing record to the billing sub-system 118. If the call handling package defines that all or some of the call charge be billed to someone other than the caller the generated call billing record reflects this accordingly.

If the call handling package defines a limitation parameter, for example which limits the maximum number of times which the capability number may be called, or which limits the total length of time during which the capability number works, the limitation parameter may need to be updated accordingly. This may be done, in some instances, upon termination of the call (step 318), for example where the limitation parameter defines a maximum number of times which the capability number may be called.

In other cases, however, for example where the limitation parameter defines a maximum length of time available for calls to the capability number, the updating of the limitation parameter preferably occurs additionally during the call, at suitable intervals. For example, where the limitation parameter relates to a maximum number of minutes, a suitable interval for updating the limitation parameter may be every minute.

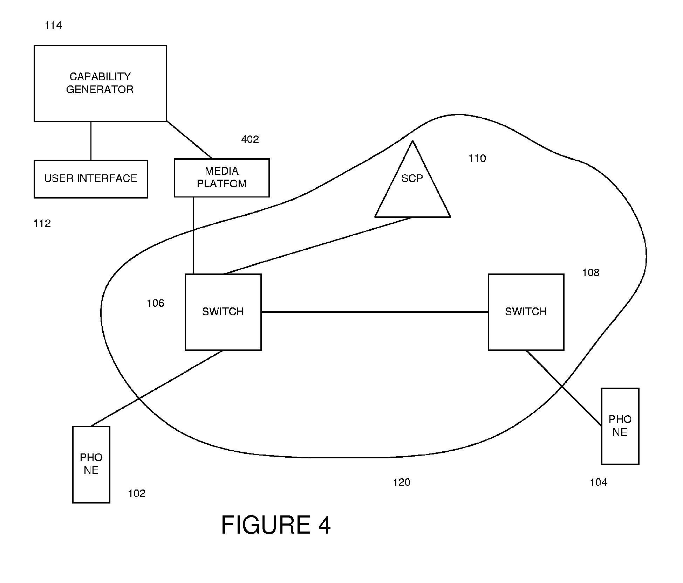

An alternative embodiment is shown in Figure 4 which has many elements in common with the embodiment shown in Figure 1, with like references being used to indicate like elements. In the present embodiment, there is no provisioning system 116, but the system instead includes a media platform 402, such as a Hewlett-Packard Open Call Media Platform (OCMP). As is well known in the art, a media platform provides an advanced processing platform which additionally has telephone network capabilities, such as the ability to make, terminate and generally manage telephone calls.

The call handling package is created in the same way as described above with reference to the first embodiment but instead of the call handling package and capability number being supplied to the provisioning system they are supplied instead to the media platform 402. All of the capability numbers allocated by the call handling package generator are diverted to the media platform 402, so that any call made to a capability number is answered by the media platform 402. When a call is made to a capability number the call is diverted by the switch 106, if necessary after having interrogated the SCP 110, to the media platform 402. The media platform 402 answers the call and retrieves the dialed capability number from data sent by the switch 106 during the call establishment phase of the call. The media platform also receives the caller line identity of the terminal or line used for making the call.

The media platform 402 uses the capability number to retrieve the call handling package associated with that number which has been previously received from the capability generator 114. Based on the retrieved call handling package and, if appropriate, the calling line identity, the media platform 402 determines whether the call can be established. If the conditions defined in the call handling package associated with the dialed capability number are satisfied the media platform 402 may make a new call establishment request to a telephone subscriber number defined in the call handling package. If this call establishment request results in the call being connected the media platform 402 connects the caller to the newly established call.

In a further alternative embodiment the same techniques as those described above may be used but the allocated capability telephone number is replaced by an allocated capability code number. The capability code number is not a telephone number, but is an identification code which uniquely identifies a call handling package. A generic telephone number, however, is provided in place of the capability telephone number, with calls to the generic telephone number being automatically diverted to a suitable voice application hosted by the media platform 402.

When a call is answered by the voice application the voice application requests, for example by way of appropriate voice menus, the user to enter their capability code number. This may be achieved, for example through use of appropriate speech recognition of dual tone multi-frequency (DTMF) tone recognition.

The voice application retrieves the call handling package associated with the entered capability code number, and the voice application handles the call in accordance with the call handling package.

Such an arrangement has the advantage of only requiring the use of a single telephone number, i.e. that of the voice application, rather than requiring an individual telephone number for each capability number as in the previous embodiments. This may be particularly advantageous in situations where it is not possible or is undesirable to have large numbers of virtual telephones numbers allocated to a service provider.

Call handling packages may also be available for purchase by businesses or individuals from third party providers of capability numbers. In this way, a business could supply details of a capability number which they require, and the third party provider could arrange for a suitable capability number to be created for the business.

It may also be envisaged that the present invention also leads to the establishment of a new market in the trading of capability numbers. For example, if one user has a capability number which provides free unlimited access to a support hotline the user may be able to sell or lease the capability number to another user requiring access to the support hotline. For example, if the capability number is a personal capability number accessible only from a predetermined telephone subscriber number, a further embodiment provides that the user interface 112 and the capability generator 114 are arranged to allow the current 'owner' of the capability number to modify the predetermined number defined in the call handling package to another telephone subscriber number. In this way, 'ownership' of the capability number may be transferred.

The transfer of a capability number may be achieved in any manner of different ways. For example, if the capability number is assigned to a telephone subscriber number of a mobile telephone, the user interface 112 may be arranged to effect the transfer by receiving an SMS message, sent from the currently assigned telephone subscriber number, containing the capability number and the telephone subscriber number to which the capability number is to be transferred.

Although the above description has been made with reference to telephone systems and telephone numbers, those skilled in the art will appreciate, however, that the same or similar techniques may be applicable in other domains without detracting from the inventive concepts described above. For example, the inventive concepts presented above are applicable in any communications system in which communications devices are identifiable by way of an identifier. In this way, a call handling package may be associated with an identifier such that subsequent communications initiated through use of the identifier are handled in accordance with the identifier.

For instance, further embodiments may include adaptation for use in a session initiation protocol (SIP) network, where a call handling package may be associated with a SIP universal resource indicator (URI) instead of a telephone subscriber number in a PSTN network. In this case, for example, reference to switches, service control points, and media platforms may be replaced by their SIP equivalents.

Further application may be made, for example, in domains such as the world-wide web, allowing the additional functionality to be added to web URIs, in a similar way to which additional functional is added to telephone numbers through the above-described embodiments.

Although reference has been herein primarily to capability numbers which are virtual telephone numbers, those skilled in the art will appreciate suitable call handling packages may also be associated with non-virtual or conventional telephone number in a similar manner.

## Claims

1. A method, in a telecommunications network, of creating user-definable call handling functionality accessible by way of telephone call to a voice application, comprising:
generating a call handling package comprising one or more conditions, and one or more call handling actions;
allocating an identifier to the call handling package in such a way that when a call is placed to the voice application the allocated identifier is requested, and in response to receiving the allocated identifier the voice application handles the call in accordance with the call handling package associated with the identifier.

2. A method according to claim 1, wherein the step of generating a call handling package further comprises defining in one of the call handling actions a destination telephone number.

3. A method according to claim 1 or 2, wherein the step of generating further comprises defining a limitation parameter.

4. A method according to claim 3, wherein the step of defining a limitation parameter comprises defining a limit as to the maximum number of times a call to the telephone number may result in the call being connected to the destination telephone number.

5. A method according to claim 3 or 4, wherein the step of defining a limitation parameter comprises defining a limit as the maximum length of a call.

6. A method according to claim 3, 4 or 5, wherein the step of creating a condition comprises defining a time call window during which a call to the telephone number may result in the call being connected to the destination telephone number.

7. A method according to claim 3, 4, 5 or 6, wherein the step of creating a condition comprises defining an expiry time, before which a call to the telephone number may result in the call being connected to the destination telephone number.

8. A method according to any of claims 3 to 7, wherein the step of creating a condition comprises defining one or more telephone numbers from which a call to the telephone number may result in the call being connected to the destination telephone number.

9. A method according to any previous claim, wherein the step of creating one or more call handling actions comprises defining a telephone subscriber account number to be billed for any call charges relating from a subsequent call being connected to the destination telephone number,

10. A method according to any previous claim, further comprising sending details of the created call handling package to the creator thereof.

11. A method according to any of claims 8 to 11, further comprising sending details of the created call handling package to one or more of the defined telephone subscriber numbers.

12. A method according to any previous claim, wherein the telecommunication network further includes a media platform hosting the voice application the method further comprising supplying details of the call handling package and allocated identifier to the media platform or voice application.

13. A method of accessing user-defined call handling functionality accessible through a telephone call placed to a voice application through a telecommunications network, comprising:
requesting an identifier;
retrieving a call handling package associated with the identifier, the call handling package comprising one or more call handling actions and one or more conditions;
carrying out at least one of the call handling actions in accordance with the one or more conditions.

14. A method according to claim 13, wherein the call handling package further includes a limitation parameter, and wherein the step of carrying out of at least one of the call handling actions is conditional on the value of the limitation parameter.

15. A method according to claim 13 or 14, wherein the limitation parameter defines a limit as to the maximum number of times the call handling functionality may be accessed, the step of carrying out at least one of the call handling actions only occurring where the value of the limitation parameter is below a predefined value.

16. A method according to any of claims 13 to 15, wherein the one or more conditions defines a call time window, the step of carrying out at least one of the call handling actions only occurring where the call is placed in the time window.

17. A method according to any of claims 13 to 16, wherein the one or more conditions define an expiry time, the step of carrying out at least one of the call handling actions only occurring where the call is placed prior expiration of the expiry ti me.

18. A method according to any of claims 13 to 17, wherein the one or more conditions define one or more allowed calling telephone numbers, the step of carrying out at least one of the call handling actions only occurring where the call is placed from one of the defined allowed calling telephone numbers.

19. A method according to any of claims 13 to 18, further comprising, upon completion of the call, generating a billing record in accordance with the one or more call handling actions.

20. A voice application for a telecommunications system adapted for operating in accordance with any of claims 1 to 19.
